# EUROPEAN PATENT APPLICATION

(11) **EP 1 510 285 A1**
(43) Date of publication of application: **02.03.2005**
(21) Application number: 04020038.8
(22) Date of filing: 24.08.2004
(51) Int. Cl.: B23Q 11/08

(54) **Dust intrusion preventing device**

(30) Priority: 26.08.2003 JP 2003301931
(71) Applicant: FANUC LTD, Minamitsuru-gun, Yamanashi 401-0597 (JP)
(72) Inventor: Maki, Susumu, FANUC Dai3virakaramatsu, Minamitsuru-gun Yamanashi 401-0511 (JP); Hoshino, Yoshinori, Hadano-shi Kanagawa 257-0013 (JP)
(74) Representative: Schmidt, Steffen J., Dipl.-Ing.

(57) **Abstract**

A dust intrusion preventing device includes a sealing element for sealing a gap between sliding members movable relative to each other, and ejection means, disposed along a lengthwise direction of the sealing element, for ejecting air or coolant. By ejecting air or coolant from the ejection means disposed along the lengthwise direction of the sealing element, dust is prevented from passing through a gap between the sliding members and intruding into the inside.

## Description

### BACKGROUND OF THE INVENTION

### 1. Field of the Invention

The present invention relates to a dust intrusion preventing device for preventing intrusion of dust in a telescopically extendable assembly, a telescopic cover provided with said dust intrusion preventing device, and a moving mechanism provided with said telescopic cover.

### 2. Description of the Related Art

A mechanically movable type apparatus such as a machine tool or other manufacturing apparatus employs a moving mechanism in various portions thereof. Such a moving mechanism is required, in the working environment, to prevent intrusion and adhesion of dust in order to ensure the smooth movement thereof.

For example, in a moving mechanism using rotatable ball screws, a normal operation thereof may be disturbed by the adhesion of dust. Further, in a moving mechanism using a linear motor, if magnetized cuttings of nickel or the like are attracted to a magnet, friction may be generated between a rotor and a stator, thereby to result in a breakage of a coil constituting the magnet.

As such a device for preventing intrusion and adhesion of dust in the moving mechanism, in a known configuration, a plurality of cover members surrounding the moving mechanism are overlapped with each other so as to be slidable relative to each other to form a telescopic cover telescopically extendable in a predetermined direction and the telescopic cover is arranged on the outside of the moving mechanism.

In this telescopic cover, outer air can be sucked thereinto upon extension or contraction, which can allow dust to intrude into the inside area of the cover. To solve this problem, a configuration has been proposed in which a bellows type cover is provided inside of the telescopic cover.

Further, in such a telescopic cover, a seal member is generally provided in a gap between the adjacent cover members for removing cuttings adhered on the telescopic cover. The seal member sweeps and removes cuttings adhered on the cover member when the telescopic cover contracts.

In Japanese Unexamined Patent Publication (Kokai) No. 2003-094284, a construction is proposed in which the internal pressure of a bellows type cover is made higher than the atmospheric pressure in order to prevent intrusion of dust having a smaller size.

Alternatively, from Japanese Unexamined Patent Publication (Kokai) Nos. 11-70438 or 10-118884, methods using a coolant have been known as a common technique for removing cuttings.

In the prior art, the seal member used in the telescopic cover is worn due to the contact friction generated during the movement of the telescopic cover or the friction generated in a sweeping of cuttings. As the wear of the seal member progresses, the ability to remove cuttings decreases. The decreased ability to remove cuttings can disturb the normal operation of the driving mechanism due to the intrusion of dust such as cuttings or the like into the driving mechanism or the clogging of cuttings in a movable portion, resulting in a risk of breakage of the telescopic cover or a splash guard.

The above-mentioned problems are more serious as a machining speed of a manufacturing apparatus such as a machine tool or others increases. The shortening of an available life of sealing parts results in a more frequent exchanging of the sealing parts.

The common technique for removing cuttings by using a coolant is intended to remove dust adhered on a workpiece or a table, as described in Japanese Unexamined Patent Publication Nos. 11-70438 and 10-118884, and effective means for removing dust adhered on mutually slidable members such as in a telescopic cover has not yet been proposed.

### SUMMARY OF THE INVENTION

Accordingly, an object of the present invention is to provide a dust intrusion preventing device in which dust such as cuttings adhered on a sliding member can be removed to prevent intrusion of dust.

Another object of the present invention is to provide a telescopic cover in which intrusion of dust into the inside area thereof surrounded by a cover member can be prevented.

A further object of the present invention is to provide a moving mechanism in which intrusion of dust into the moving mechanism can be prevented.

According to the present invention, a mechanism for ejecting fluid such as air or coolant to a sealing element is provided, thereby to remove dust adhered on sliding members.

The present invention includes aspects of a dust intrusion preventing device, a telescopic cover provided with the dust intrusion preventing device and a moving mechanism provided with the telescopic cover.

According to a first aspect of the present invention, there is provided a dust intrusion device for preventing intrusion of dust, which includes a sealing element for sealing a gap between sliding members movable to each other, and ejection means, disposed along a lengthwise direction of the sealing element, for ejecting air or coolant. By ejecting air or coolant from the ejection means disposed along the lengthwise direction of the sealing element, dust is prevented from passing through the gap between the sliding members.

In one embodiment, the ejection means includes at least one ejection orifice formed on a surface of the sealing element and a supply passage formed in the interior of the sealing element and communicating with the ejection orifice, and the air or coolant supplied from the supply passage is ejected from the ejection orifice, so that the ejected air or coolant prevents intrusion of dust into a gap between the sealing element and the sliding member.

The at least one ejection orifice may be an opening formed on a surface of the sealing element, and the opening may be formed on a surface of the sealing element opposite to the sliding member or on an outer surface of the sealing element. In this case, the opening is connected through a communicating passage to the supply passage formed in the sealing element. The air or coolant supplied from the supply passage is ejected from the opening through the communicating passage. By ejecting air or coolant from the opening formed on the surface of the sealing element opposite to the sliding member, it is made possible to prevent intrusion of dust into a gap between the sealing element and the sliding member as well as to maintain a predetermined gap between the sliding members, thereby to reduce the contact friction between them.

In another embodiment, the ejection means includes a supply tube formed with at least one ejection orifice and disposed adjacent to an outer surface of the sealing element, and the air or coolant supplied from the supply tube is ejected from the ejection orifice, so that the ejected air or coolant prevents intrusion of dust into the inside of the sealing element.

The ejection means may always eject air or coolant. Also, the operation of the ejection means may be controlled based on the movement state. For example, the ejection means may eject air or coolant when the sliding members slide to each other. Particularly, the ejection means preferably ejects air or coolant when two adjacent sliding members slide on each other so that one member moves back relative to the other.

According to a second aspect of the present invention, there is provided a telescopic cover formed by a plurality of cover members telescopically assembled together so as to be slidable to each other, in which the above dust intrusion preventing device is provided at an end of at least one of adjacent cover members and in which the dust intrusion preventing device ejects air or coolant toward a outer surface of the inner cover member of those to be able to provided with the dust intrusion preventing device, thereby to prevent intrusion of dust into the telescopic cover.

One or more ejection orifices may be formed on a surface of the sealing element opposite to the inner cover member of those to be able to provided with the dust intrusion preventing device and/or on a front surface of the sealing element positioned forward of the opposite surface. By forming the ejection orifice on the opposite surface, it is made possible to prevent intrusion of dust as well as to maintain a predetermined gap between the sealing element and the cover member, thereby to reduce a contact friction between them.

According to a third aspect of the present invention, there is provided a moving mechanism, which is provided with the above telescopic cover.

Further, according to a fourth aspect of the present invention, there is provided a moving mechanism, which includes a telescopic cover provided with the above dust intrusion preventing device, and control means for controlling a supply of air or coolant, and in which the control means controls the supply of air or coolant, based on a presence/absence or a moving direction of a moving command for a moving axis of the moving mechanism.

The dust intrusion preventing device according to the present invention makes it possible to remove dust such as cuttings or the like adhered on the sliding member, thereby to prevent intrusion of dust.

Also, the telescopic cover according to the present invention makes it possible to prevent intrusion of dust into the inside of the cover member.

Further, the moving mechanism according to the present invention makes it possible to prevent intrusion of dust into the moving mechanism.

### BRIEF DESCRIPTION OF THE DRAWINGS

The above-mentioned and other objects, features and advantages of the present invention will be described in more detail below based on the embodiments thereof with reference to the accompanying drawings, wherein:
Fig. 1 is a schematic view illustrating one embodiment of a telescopic cover according to the present invention;
Figs. 2A and 2B are schematic views of the telescopic cover according to the present invention, Fig. 2A illustrating a state in which the telescopic cover is extended, and Fig. 2B illustrating a state in which the telescopic cover is contracted;
Fig. 3A is a sectional view illustrating a first embodiment of a dust intrusion preventing device according to the present invention;
Fig. 3B is a sectional view illustrating a variation of the embodiment of Fig. 3A;
Fig. 4 is a sectional view illustrating a second embodiment of a dust intrusion preventing device according to the present invention;
Fig. 5 is a view of the dust intrusion preventing device shown in Fig. 4 as seen from a forward end of the telescopic cover;
Fig. 6 is a sectional view illustrating a third embodiment of a dust intrusion preventing device according to the present invention;
Fig. 7 is a view of the dust intrusion preventing device shown in Fig. 6 as seen from a forward end of the telescopic cover;
Fig. 8 is a view illustrating a first system for supplying air or others in the first and second embodiments of the dust intrusion preventing device;
Fig. 9 is a view illustrating a second system for supplying air or others in the first and second embodiments of the dust intrusion preventing device;
Fig. 10 is a view illustrating a third system for supplying air or others in the first and second embodiments of the dust intrusion preventing device;
Fig. 11 is a block diagram of a general configuration of a telescopic cover having a moving mechanism to which a dust intrusion preventing device according to the present invention is applied;
Fig. 12 is a flow chart of a first method for controlling the dust intrusion preventing device according to the present invention;
Fig. 13 is a flow chart of a second method for controlling the dust intrusion preventing device according to the present invention; and
Fig. 14 is a flow chart of a third method for controlling the dust intrusion preventing device according to the present invention.

### DETAILED DESCRIPTION

The embodiments of the present invention will be described in more detail below with reference to the accompanying drawings.

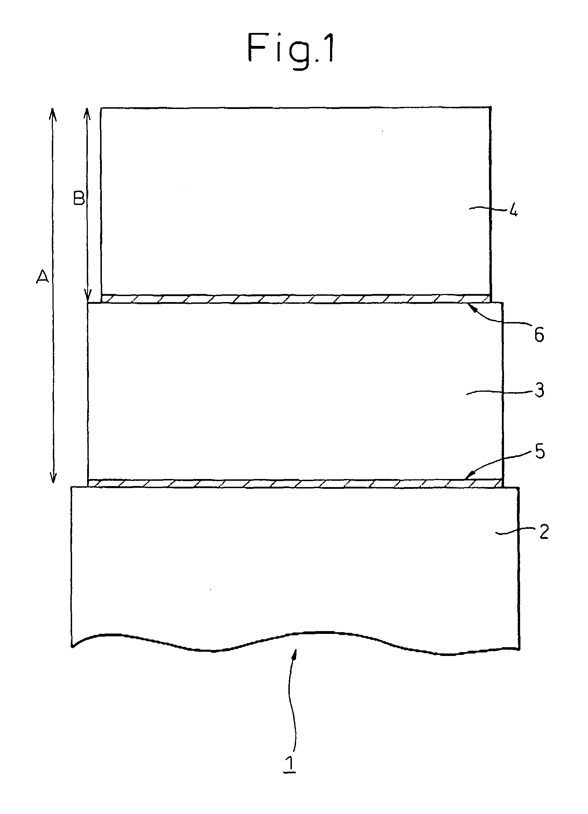

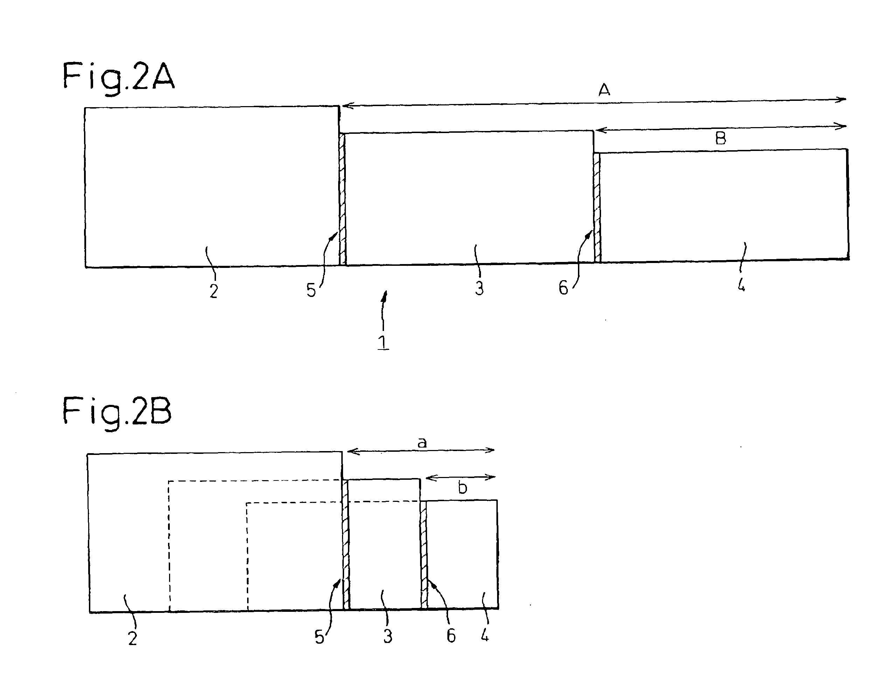

Figs. 1, 2A and 2B are schematic views illustrating one embodiment of a telescopic cover according to the present invention, respectively. The telescopic cover 1 shown in fig. 1 includes three similar cover members 2, 3 and 4 which are telescopically assembled with each other. Inner and outer dimensions of each of the similar cover members 2, 3, 4 are determined such that the cover member 2 is positioned on the outermost side and the cover member 4 is positioned on the innermost side with the cover member 3 interposed between the cover members 2, 4. The telescopic cover 1 is telescopically extendable and contractible as a whole, for example, by a mechanism (not shown) making the cover members 2, 3, 4 slidable to each other or by a link mechanism, or others, interlocking them to each other.

In Figs. 1, 2A and 2B, the cover member 3 is incorporated in the inside of the cover member 2, and a dust intrusion preventing device 5 for preventing intrusion of dust is provided in a portion where both the cover members are overlapped with each other. The dust intrusion preventing device 5 is disposed inside a forward end of the cover member 2 (an end closer to the cover member 3) along an edge thereof, thereby to prevent intrusion of dust into the inside area of the cover member 2.

Similarly, the cover member 4 is incorporated in the inside of the cover member 3, and a dust intrusion preventing device 6 is provided in a portion where both the cover members are overlapped with each other. The dust intrusion preventing device 6 is disposed inside a forward end of the cover member 3 (an end closer to the cover member 4) along an edge thereof, thereby to prevent intrusion of dust into the inside area of the cover member 3.

Although a placement position of the dust intrusion preventing device 5, 6 relative to the cover member 2, 3 is not limited to the forward end of the cover member, a configuration in which the dust intrusion preventing device is disposed at the forward end of the cover member is more suitable for utilizing the length of the cover member 2, 3 as much as possible and facilitating an effect for preventing intrusion of dust into the inside area when the telescopic cover is extended. Although a hatched area in Figs. 1, 2A and 2B illustrates one example of the provision of the dust intrusion preventing device 5, 6, the dust intrusion preventing device 5, 6 is not necessarily exposed to the outside but may be accommodated within the inside area of the cover member such that it is not exposed to the outside.

Fig. 2A illustrates a state in which the telescopic cover 1 is extended, and Fig. 2B illustrates a state in which the telescopic cover 1 is contracted.

In Fig. 2A, "A" denotes a length from a forward end of the cover member 2 (a right end in the figure) to a forward end of the cover member 4 (a right end in the figure) when the telescopic cover 1 is extended; and "B" denotes a length from a forward end of the cover member 3 (a right end in the figure) to a forward end of the cover member 4 (a right end in the figure) when the telescopic cover 1 is extended. On the other hand, in Fig. 2B, "a" denotes a length from the forward end of the cover member 2 to the forward end of the cover member 4 when the telescopic cover 1 is contracted; and "b" denotes a length from the forward end of the cover member 3 to the forward end of the cover member 4 when the telescopic cover 1 is contracted.

If dust such as cuttings or the like is adhered on a surface of the cover member 3 or the cover member 4 in a extended state of the telescopic cover 1, the dust adhered on the surface is liable to intrude into the inside area of the cover member 2 or the cover member 3 when the telescopic cover 1 changes from the extended state to the contracted state. Accordingly, the dust intrusion preventing devices 5, 6 are effective to prevent intrusion of dust into the inside area of the cover member 2 or the cover member 3.

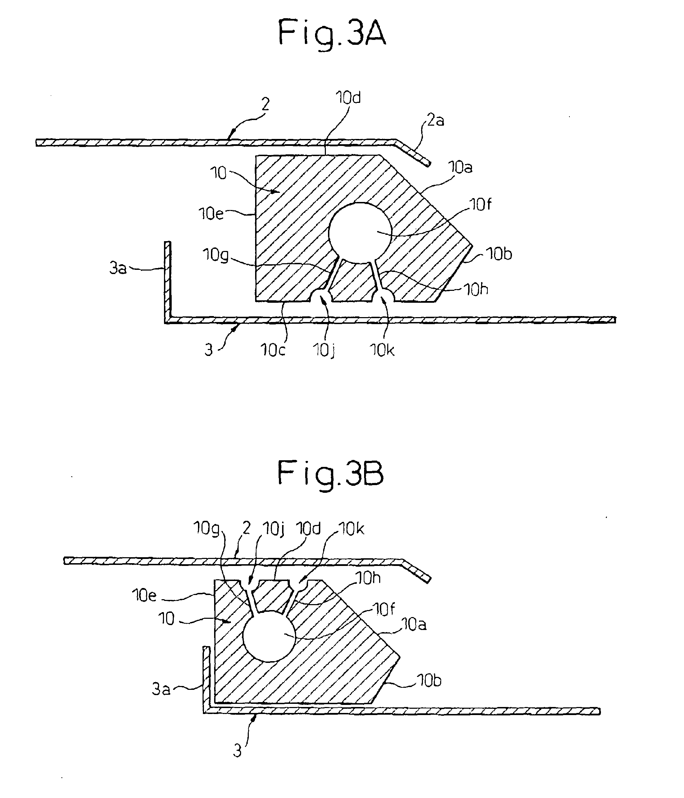

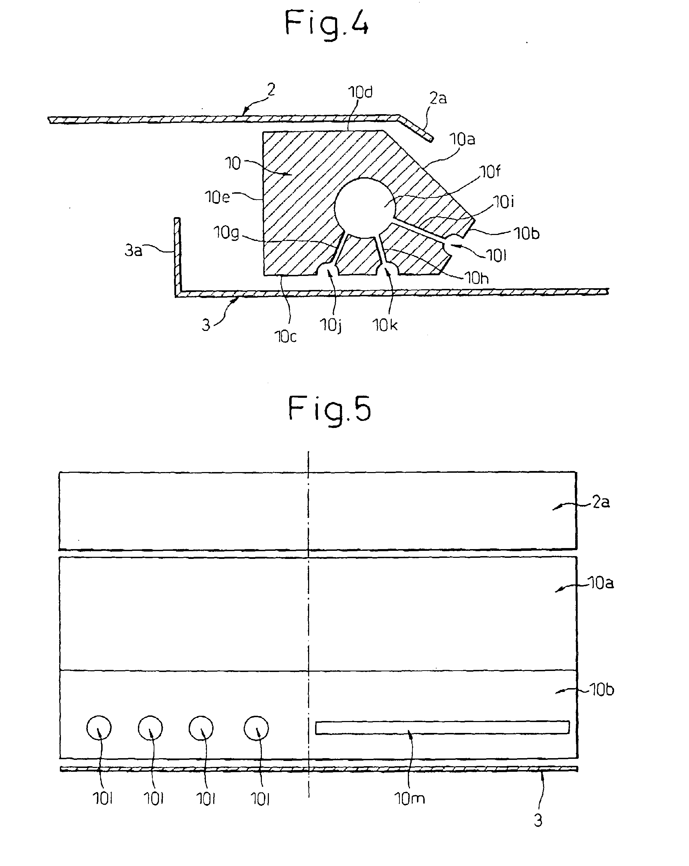

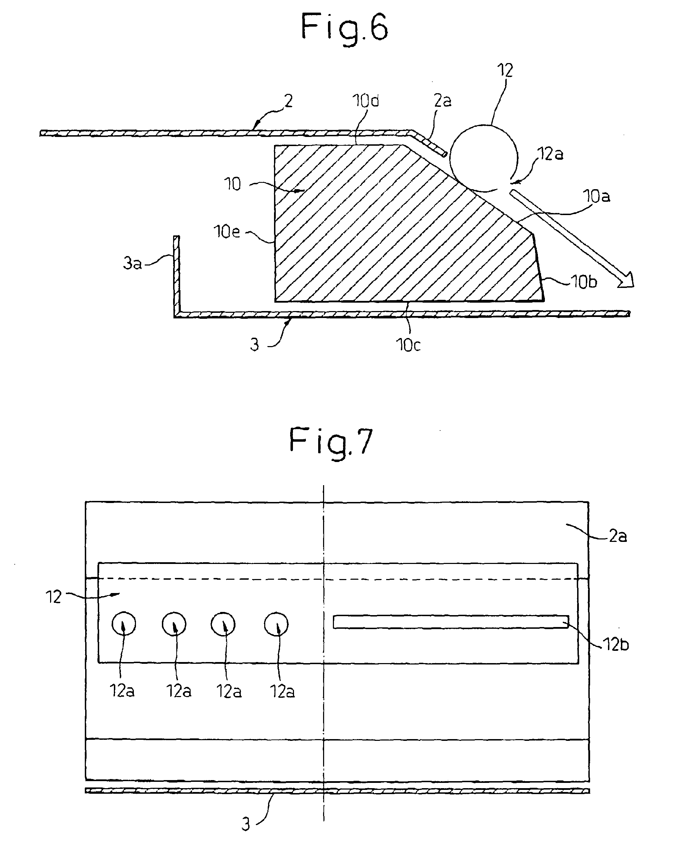

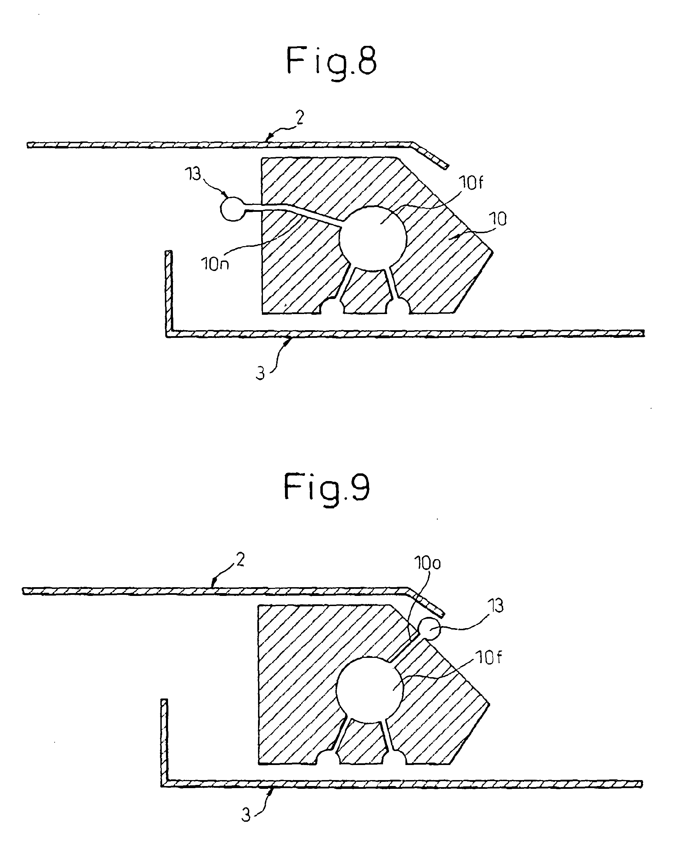

Several embodiments of the dust intrusion preventing device according to the present invention will be described below with reference to Figs. 3A to 10. In a first embodiment shown in Fig. 3A and a second embodiment shown in Figs. 4 and 5, ejection orifices for ejecting air or coolant are formed in a sealing element, while in a third embodiment shown in Figs. 6 and 7, ejection orifices are provided outside the sealing element. Figs. 8 to 10 illustrate various systems for supplying air or others which is usable in the first and second embodiments of the dust intrusion preventing device.

Firstly, a first embodiment of the dust intrusion preventing device according to the present invention will be described with reference to Fig. 3A. Fig. 3A shows a cross-section of a dust intrusion preventing device provided between two cover members telescopically assembled.

The dust intrusion preventing device 5 includes a sealing element 10 for shutting off the inside of the cover members 2, 3 from the outside thereof, and ejection means (10f to 10h, 10j and 10k) for ejecting air or coolant.

In Fig. 3A, the sealing element 10 is constituted by a member for shutting off the inside area of the cover member 2 from the external environment to prevent intrusion of dust such as cutting or the like and may be made, for example, of elastic material such as rubber material, silicon rubber or the like, or resin material.

The ejection means includes a supply passage 10f for supplying air or coolant, openings 10j, 10k for ejecting air or coolant supplied from the supply passage 10f to the outside thereof, and communicating passages 10g, 10h for connecting the supply passage 10f to the openings 10j, 10k, respectively. The supply passage 10f receives air or coolant supply from an air or coolant source (not shown) and ejects the same from the openings 10j, 10k to the outside thereof through the communicating passages 10g, 10h.

In Fig. 3A, the inner dimension of the outer cover member 2 is determined to be larger than the outer dimension of the inner similar cover member 3, so that both the cover members 2, 3 can be telescopically assembled with each other so as to be slidable to each other, and the sealing element 10 of the dust intrusion preventing device 5 is disposed in a gap between the adjacent cover members 2, 3 and extends along a widthwise direction of the cover members 2, 3 (a circumferential direction around a sliding axis of the cover members 2, 3). The sealing element 10 is fixed to the inner surface of the outer cover member 2. However, the sealing element 10 may be fixed to the cover member 2 by attaching a forward surface 10a of the sealing element 10, in the gap between both the cover members 2, 3, to a forward end 2a of the cover member 2 bended inwardly toward the cover member 3, or may be fixed to the cover member 3 by attaching a rear surface 10e of the sealing element 10 to a rear end 3a of the cover member 3 bended outwardly toward the cover member 2, as shown in Fig. 3B. Accordingly, even if the cover members 2 and 3 slide to each other, the sealing element 10 is held within the gap between the cover members 2, 3.

Air or coolant supplied from the air or coolant source, not shown, is supplied over a whole or a part of the length of the sealing element 10 through the supply passage 10f. The air or coolant then flows through the communicating passage 10g, 10h and is ejected from the openings 10j, 10k to the outside thereof.

In the first embodiment shown in Fig. 3A, the openings 10j, 10k are formed on a surface 10c of the sealing element 10 opposite to the inner cover member 3. Air or coolant ejected from the openings 10j, 10k fills the gap between the outer surface of the cover member 3 and the lower surface 10c of the sealing element 10, and thereafter, is ejected forward from the forward end of the sealing element 10 along the outer surface of the cover member 3. This ejection of air or coolant removes dust, such as cuttings or the like, adhered on the outer surface of the cover member 3.

In the first embodiment, by ejecting air or coolant from the lower surface 10c of the sealing element 10 toward the outer surface of the cover member 3, the gap area between the lower surface 10c of the sealing element 10 and the outer surface of the cover member 3 is filled with the air or coolant. The air or coolant filling the gap area can also serve as a lubricant between the sealing element 10 and the cover member 3 to thereby have an effect of facilitating the smooth sliding motion of the cover member 2 and the cover members 3 telescopically assembled together.

An inclination of a forward surface 10b of the sealing element 10 closer to the cover member 3 is preferably determined such that the forward surface 10b forms an acute angle relative to the outer surface of the cover member 3. By determining the inclination of the forward surface 10b relative to the outer surface of the cover member 3 to be an acute angle, it is made possible to direct the air or coolant, discharged outwardly from the gap between the cover member 3 and the lower surface 10c opposite thereto to the outside, toward the outer surface of the cover member 3, and to enhance the effect of removing dust adhered on the outer surface of the cover member 3.

Although the openings 10j, 10k, in the first embodiment, are formed on the lower surface 10c of the sealing element 10 opposite to the outer surface of the cover member 3, the openings are formed on an upper surface 10d of the sealing element 10 opposite to the inner surface of the cover member 2 in the case that the sealing element 10 is fixed to the cover member 3, as shown in Fig. 3B. Besides the above-mentioned configuration in which the openings are formed on either one of the lower surface 10c and the upper surface 10d, a configuration may be arranged in which openings are formed on both of the lower and upper surfaces 10c, 10d.

In order to prevent the air or coolant discharged from the openings 10j, 10k from intruding into the inside area surrounded by the cover member 2, the inside area surrounded by the cover member 2 may be tightly sealed, or the inner pressure of the inside area may be higher than the external pressure, for example, by supplying air to the inside area. Also, it is possible to cause the air or coolant ejected from the openings into the gap between the sealing element 10 and the cover member 3 to be easily directed forward along the outer surface of the cover member 3, by inclining the lower surface 10c of the sealing element 10 relative to the outer surface of the cover member 3 so that a gap distance between the lower surface 10c of the sealing element 10 and the outer surface of the cover member 3 becomes slightly larger on the inside (rear side) than on the outside (front side).

Next, a second embodiment of a dust intrusion preventing device according to the present invention will be described with reference to Fig. 4. Similarly to Fig. 3A, Fig. 4 shows a cross-section of a dust intrusion preventing device provided between two cover members telescopically assembled.

As the second embodiment has substantially the same construction as in the first embodiment, except that an opening 101 is formed on the front surface 10b of the sealing element 10 in addition to the lower surface 10c thereof, the difference in construction will be mainly described.

The opening 101 is connected to the supply passage 10f through a communicating passage 10i, so that air or coolant supplied from the supply passage 10f is ejected forwardly toward the outer surface of the cover member 3. The ejecting direction of the opening 101 is directed toward an area of the outer surface of the cover member 3 forward of the sealing element 10, so that the ejected air or coolant can effectively remove dust adhered on the outer surface of the cover member 3.

In the second embodiment, the front surface 10b of the sealing element 10 forms an acute angle relative to the outer surface of the cover member 3, so that the air or coolant is ejected from the opening 101 toward an area of the outer surface of the cover member 3 forward of the sealing element 10.

Alternatively, the openings 10j, 10k may be eliminated and the opening 101 only may be provided, in the second embodiment.

Fig. 5 is a view of the dust intrusion preventing device shown in Fig. 4 as seen from a forward end of the telescopic cover. For purpose of simplifying an explanation, Fig. 5 shows one configuration in which a plurality of circular openings 101 are aligned in the lengthwise direction of the sealing element (a configuration on the left side of a chain line in Fig. 5) and another configuration in which one slit-like opening 10m is arranged to extend in the lengthwise direction of the sealing element (a configuration on the right side of the chain line in Fig. 5) at the same time. In this way, the opening(s) may be constituted by a plurality of circular openings aligned in the lengthwise direction of the sealing element as shown on the left side of Fig. 5 or by one slit-like opening as shown on the right side of Fig. 5. Also, the opening(s) may be formed by aligning a plurality of slit-like openings shown on the right side of Fig. 5 in the lengthwise direction of the sealing element 10, or by combining one or more circular openings with one or more slit-like openings.

Next, a third embodiment of a dust intrusion preventing device according to the present invention, which is different from the first and second embodiments in that the ejection means is provided outside the sealing element, will be described with reference to Fig. 6. Similarly to Figs. 3A and 4, Fig. 6 shows a cross-section of a dust intrusion preventing device provided between two cover members telescopically assembled.

The dust intrusion preventing device 5 includes a sealing element 10, and a supply tube 12 provided with ejection means. The sealing element 10 is formed of elastic material or resin material, as in the above-mentioned first and second embodiments, and disposed in a gap between the cover member 2 and the cover member 3, thereby to prevent intrusion of dust such as cuttings or the like into the inside area surrounded by the cover member 2.

The upper surface 10d of sealing element 10 is fixed to the inner surface of the cover member 2, while the lower surface 10c of the sealing element 10 is freely slidable on the cover member 3. However, the forward surface 10a of the sealing element 10 may be fixed to the forward end 2a formed by bending a part of the cover member 2, so that the lower surface 10c of the sealing element 10 is freely slidable on the cover member 3, or the rear surface 10e of the sealing element 10 may be fixed to the rear end 3a formed by bending a part of the cover member 3, so that the upper surface of the sealing element 10 is freely slidable on the cover member 2.

In the third embodiment, the front surface 10b of the sealing element 10 is configured to form an obtuse angle relative to the outer surface of the cover member 3, thereby to prevent intrusion of dust into the gap between the lower surface 10c and the cover member 3.

The supply tube 12 extending in the lengthwise direction of the sealing element 10 is arranged on the front surface 10a of the sealing element 10. The supply tube 12 serves as a supply passage for feeding air or coolant supplied from an air or coolant source (not shown) and as an ejection means. That is, the supply tube 12 is formed with an opening 12a, from which the air or coolant is ejected toward an area of the outer surface of the cover member 3 forward of the sealing element 10. An arrow in Fig. 6 indicates a direction of ejecting the air or coolant.

Fig. 7 is a view of the dust intrusion preventing device shown in Fig. 6 as seen from a forward end of the telescopic cover. For the purpose of simplifying the explanation, Fig. 7 shows one configuration in which a plurality of circular openings 12a are aligned in the lengthwise direction of the supply tube 12 (a configuration on the left side of a chain line in Fig. 7) and another configuration in which one slit-like opening 12b is arranged to extend in the lengthwise direction of the supply tube 12 (a configuration on the right side of the chain line in Fig. 7) at the same time. In this way, the opening(s) may be constituted by a plurality of circular openings aligned in the lengthwise direction of the supply tube 12 as shown on the left side of Fig. 7 or by one slit-like opening as shown on the right side of Fig. 7. Also, the opening(s) may be formed by aligning a plurality of slit-like openings shown on the right side of Fig. 7 in the lengthwise direction of the supply tube 12, or by combining one or more circular openings with one or more slit-like openings.

Next, several examples of a system for supplying air or coolant from the air or coolant source to the supply passage in the first and second embodiments will be described with reference to Figs. 8 to 10.

In a system shown in Fig. 8, a supply tube 13 is disposed in an inside area surrounded by the cover members, and is connected to the supply passage 10f formed in the sealing element 10 through a communicating passage 10n. Also, an air or coolant source, not shown, is connected the supply tube 13. The air or coolant is supplied from the air or coolant source through the supply tube 13 and the communicating passage 10n to the supply passage 10f formed in the sealing element 10.

In a system shown in Fig. 9, a supply tube 13 is disposed outside the cover member, and is connected to the supply passage 10f formed in the sealing element 10 through a communicating passage 10o. Also, an air or coolant source, not shown, is connected to the supply tube 13. The air or coolant is supplied from the air or coolant source through the supply tube 13 and the communicating passage 10o to the supply passage 10f formed in the sealing element 10.

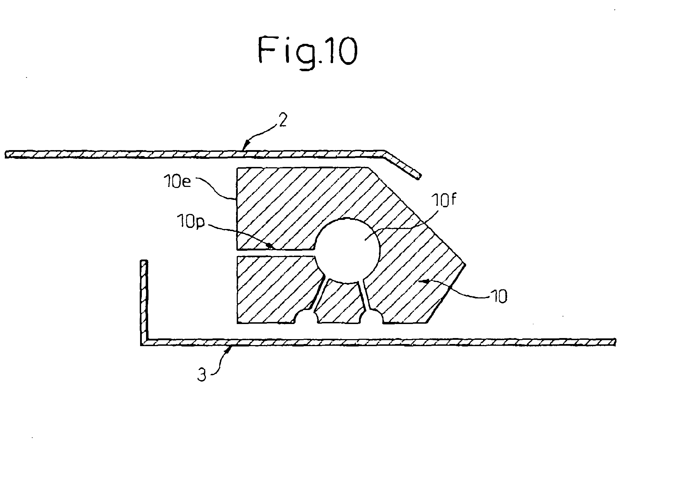

In a system shown in Fig. 10, the inside area surrounded by the cover members functions itself as a supply passage. The inside area surrounded by the cover members is connected to the supply passage 10f formed in the sealing element 10 through a communicating passage 10p. Also, an air source, not shown, is connected to the inside area surrounded by the cover members. Air is supplied from the air source through the communicating passage 10p to the supply passage 10f.

While the telescopic cover constituted by three cover members has been described above, the telescopic cover may be optionally constituted by two or more cover members. Also, while the cover members 2, 3 are shown as an example in Figs. 3A to 10, the same is applicable, of course, to the covers 3, 4.

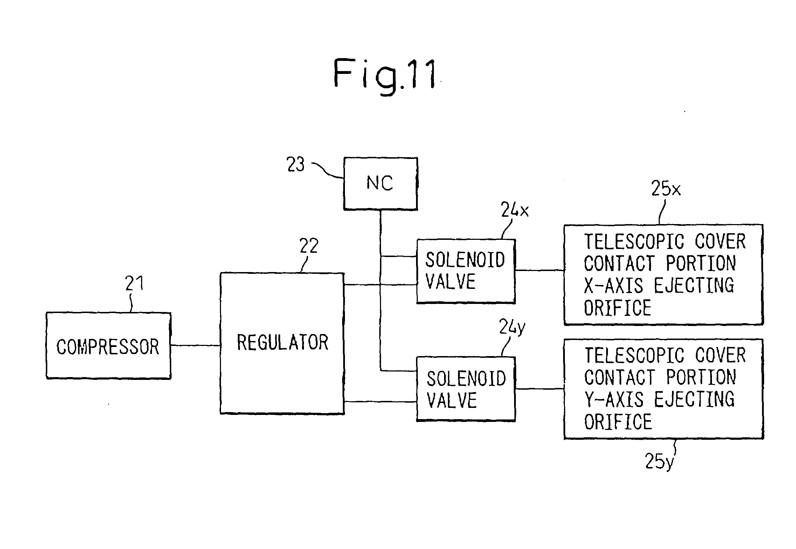

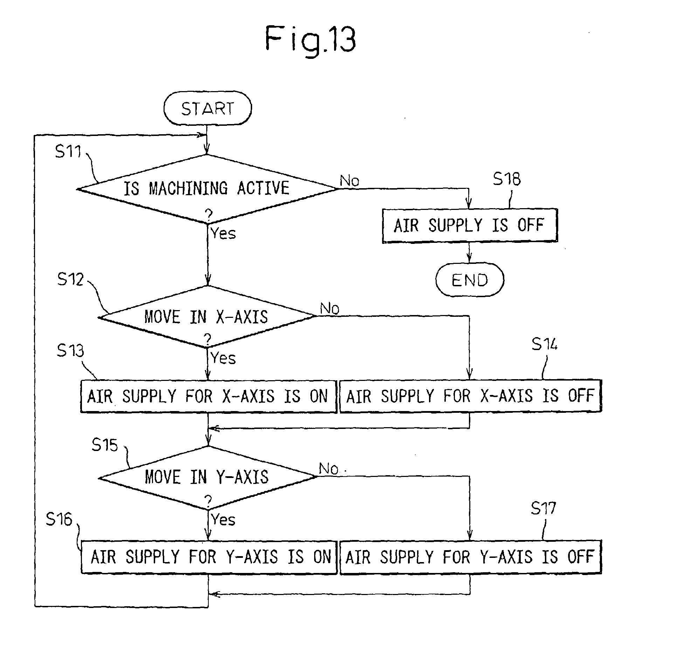

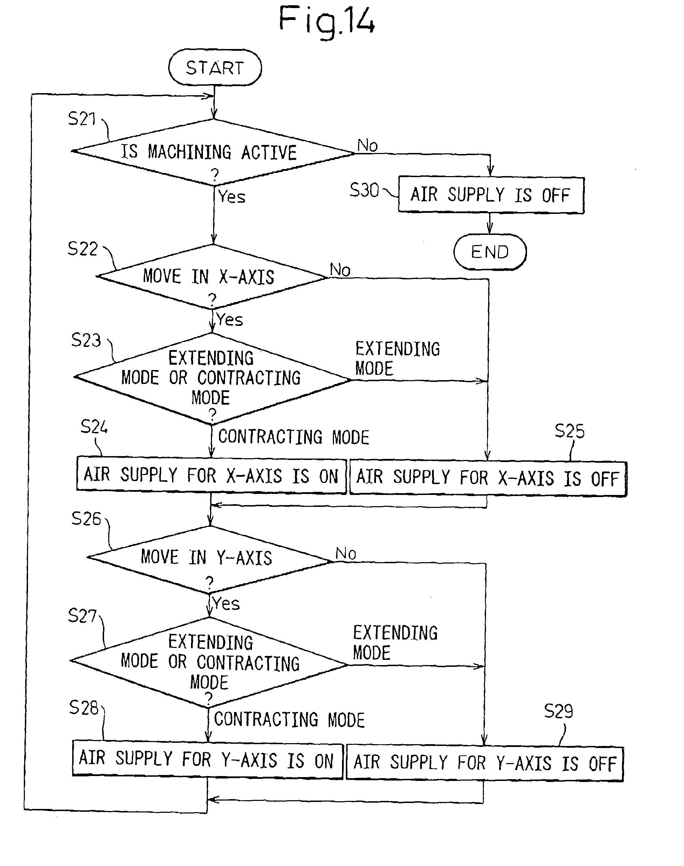

Next, a method for controlling an ejecting operation in the dust intrusion preventing device according to the present invention will be described with reference to Figs. 11 to 14.

Fig. 11 is a block diagram of a general configuration of a telescopic cover having a moving mechanism to which a dust intrusion preventing device according to the present invention is applied. In an example shown in Fig. 11, a telescopic cover is provided around a moving mechanism not shown, which is accommodated in the telescopic cover to prevent dust such as cuttings or the like from adhering to the moving mechanism. The moving mechanism includes, for example, X-axis and Y-axis mechanism portions, which are covered with telescopic covers 25x, 25y, respectively. A dust intrusion preventing device according to the present invention is provided in a portion where the cover members of the telescopic cover overlap each other and are brought into sliding contact with each other. The dust intrusion preventing device ejects air or coolant from ejection means thereof to remove dust such as cuttings or the like adhered on a surface of the cover member or other.

The telescopic covers 25x, 25y shown in Fig. 11 eject air, which is compressed by a compressor 21 and controlled to be regulated at a constant pressure by a regulator 22, from the ejection means of the dust intrusion preventing device, thereby to prevent intrusion of dust. The control of air supplied from the regulator 22 to the dust intrusion preventing devices provided in the respective telescopic covers 25x, 25y is performed by means of solenoid valves 24x, 24y. The solenoid valves 24x, 24y can be automatically controlled in synchronism with the extension/contraction of the moving mechanism, for example, based on a control signal from an NC (numerical control) device 23 for controlling the moving mechanism.

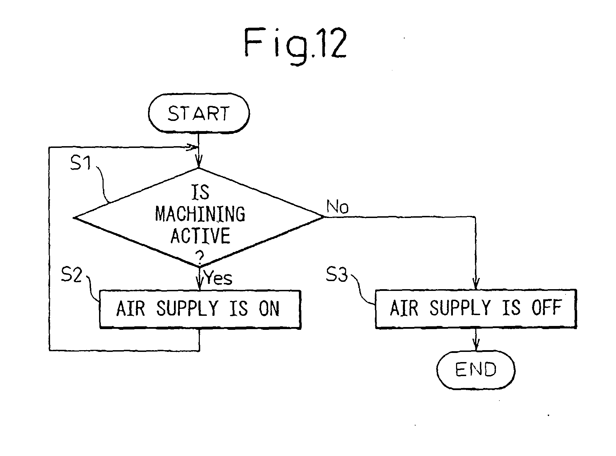

Figs. 12 to 14 show flow charts of various methods for controlling the ejecting operation of the dust intrusion preventing device.

According to a first embodiment of the control method, air discharged from the ejection means is controlled in accordance with active/inactive state of the machining. Firstly, the NC (numerical control) device 23 determines whether or not the machining is active (step S1). If the machining is active, an ON control signal is issued from the NC device 23 to the solenoid valves 24x or others, 24y, thereby to control the latter to supply air from the air source to the dust intrusion preventing device (step S2).

On the other hand, if the machining is inactive (or is stopped), an OFF control signal is issued from the NC device 23 to the solenoid valves 24x, 24y or others, thereby to control the latter to stop the supply of air from the air source to the dust intrusion preventing device (step S3).

By controlling the solenoid valves in accordance with active/inactive state of the machining, air can be supplied to the dust intrusion preventing device only during the machining process to thereby prevent intrusion of dust. On the other hand, the supply of air can be stopped, when the machining is inactive and, therefore, it is not necessary to prevent intrusion of dust.

According to a second embodiment of the control method, air discharged from the ejection means is controlled in accordance with driving conditions in respective moving axes of the moving mechanism. In this connection, an air supply control described below can be performed for each of moving axis portions of the moving mechanism.

Firstly, the NC (numerical control) device 23 determines whether or not the machining is active (step S11). If the machining is active, the NC device further determines whether or not the X-axis portion of the moving mechanism is operating or moving (step S12). If the X-axis portion of the moving mechanism is operative or moving, an ON control signal is issued from the NC device 23 to the solenoid valve 24x or others, thereby to control the latter to supply air from the air source to the dust intrusion preventing device provided on a X-axis portion of the moving mechanism (step S13). On the other hand, if the X-axis portion of the moving mechanism is not operative or moving, an OFF control signal is issued from the NC device 23 to the solenoid valve 24x or others, thereby to control the latter to stop the supply of air from the air source to the dust intrusion preventing device provided on a X-axis portion of the moving mechanism (step S14).

Then, the NC device 23 determines whether or not the Y-axis portion of the moving mechanism is operative or moving (step S15). If the Y-axis portion of the moving mechanism is operative or moving, an ON control signal is issued from the NC device 23 to the solenoid valve 24y, thereby to control the latter to supply air from the air source to the dust intrusion preventing device provided on the Y-axis portion of the moving mechanism (step S16). On the other hand, if the moving mechanism for Y-axis is not operative or moving, an OFF control signal is issued from the NC device 23 to the solenoid valve 24y, thereby to control the latter to stop the supply of air from the air source to the dust intrusion preventing device provided on the Y-axis portion of the moving mechanism (step S17).

If the NC device 23 determines at step S11 that the machining is inactive, an OFF control signal is issued from the NC device 23 to the solenoid valves 24x, 24y to stop the supply of air from the air source to the dust intrusion preventing devices (step S18).

As described above, by controlling each of the axis portions of the moving mechanism in accordance with operative/inoperative state thereof, when only some of axis portions of the moving mechanism is operative, air can be supplied only to the dust intrusion preventing device provided on that operative axis portion of the moving mechanism to thereby prevent intrusion of dust. On the other hand, when the axis portion of the moving mechanism is inoperative, the supply of air to the dust intrusion preventing device provided on that axis portion of the moving mechanism.

According to a third embodiment of the control method, air discharged from the ejection means is controlled in accordance with moving directions of the respective axis portion of the moving mechanism. In this connection, an air supply control described below can be performed for each of moving axis portions of the moving mechanism.

Firstly, the NC (numerical control) device 23 determines whether or not the machining is active (step S21). If the machining is active, the NC device 23 further determines whether or not the X-axis portion of the moving mechanism is operative or moving (step S22). If the X-axis portion of the moving mechanism is operative or moving, the NC device 23 further determines whether the X-axis portion of the moving mechanism operates in an extending mode or a contracting mode (step S23). If the X-axis portion of the moving mechanism operates in the contracting mode, an ON control signal is issued from the NC device 23 to the solenoid valve 24x or others, thereby to control the latter to supply air from the air source to the dust intrusion preventing device provided on the X-axis portion of the moving mechanism (step S24).

If the X-axis portion of the moving mechanism operates in the extending mode, an OFF control signal is issued from the NC device 23 to the solenoid valve 24x or others, thereby to control the latter to stop the supply of air from the air source to the dust intrusion preventing device provided on the X-axis portion of the moving mechanism (step S25).

Then, the NC device 23 determines whether or not the Y-axis portion of the moving mechanism is operative or moving (step S26). If the Y-axis portion of the moving mechanism is operative or moving, the NC device 23 further determines whether the Y-axis portion of the moving mechanism operates in an extending mode or a contracting mode (step S27). If the Y-axis portion of the moving mechanism operates in the contracting mode, an ON control signal is issued from the NC device 23 to the solenoid valve 24y or others, thereby to control the latter to supply air from the air source to the dust intrusion preventing device provided on the Y-axis portion of the moving mechanism (step S28).

If Y-axis portion of the moving mechanism operates in the extending mode, an OFF control signal is issued from the NC device 23 to the solenoid valve 24y or others, thereby to control the latter to stop the supply of air from the air source to the dust intrusion preventing device provided on the Y-axis portion of the moving mechanism (step S29).

If the NC device 23 determines at step S21 that the machining is inactive, an OFF control signal is issued from the NC device 23 to the solenoid valves 24x, 24y to stop the supply of air from the air source to the dust intrusion preventing device (step S30).

As described above, by controlling each of the axis portions of the moving mechanism in accordance with the moving directions thereof (that is, the extension or contraction of the telescopic cover), only when the intrusion of dust is liable to occur, air can be supplied to the dust intrusion preventing device to thereby prevent intrusion of dust. On the other hand, when the telescopic cover moves in a direction wherein it is not necessary to prevent intrusion of dust, the supply of air to the dust intrusion preventing device.

The present invention has been described above with reference to the embodiments shown in the accompanying drawings. However, these embodiments are only illustrative but not limitative. Accordingly, the present invention is defined only by the appending claims and the embodiments of the present invention can be modified variously without departing from the scope and spirit of the present invention. The technique of the present invention is not limited to the above-described embodiments but is applicable to machine tools or other manufacturing apparatuses involving mechanical movement.

## Claims

1. A dust intrusion preventing device for preventing intrusion of dust comprising:
a sealing element for sealing a gap between sliding members movable to each other;
ejection means, disposed along a lengthwise direction of said sealing element, for ejecting air or coolant; and
the ejected air or coolant preventing dust from passing through the gap.

2. The dust intrusion preventing device according to claim 1, wherein said ejection means comprises at least one ejection orifice formed on a surface of said sealing element and a supply passage formed in the interior of said sealing element and communicating with said ejection orifice, and wherein
the air or coolant supplied from said supply passage is ejected from said ejection orifice, so that the ejected air or coolant prevents intrusion of dust into a gap between said sealing element and said sliding member.

3. The dust intrusion preventing device according to claim 2, wherein said at least one ejection orifice comprises one or both of one or more openings formed on a surface of said sealing element opposite to said sliding member and one or more openings formed on an outer surface of said sealing element, said one or more openings connected to said supply passage through a communicating passage.

4. The dust intrusion preventing device according to claim 1, wherein said ejection means includes a supply tube formed with at least one ejection orifice and disposed adjacent to an outer surface of said sealing element, and wherein
the air or coolant supplied from said supply tube is ejected from said ejection orifice, so that the ejected air or coolant prevents intrusion of dust into a gap between said sealing element and said sliding member.

5. The dust intrusion preventing device according to claim 1, wherein said ejection means always ejects air or coolant.

6. The dust intrusion preventing device according to claim 1, wherein said ejection means ejects air or coolant when said sliding members slide to each other.

7. The dust intrusion preventing device according to claim 6, wherein said ejection means ejects air or coolant when two adjacent sliding members slide to each other so that one member moves back relative to the other.

8. A telescopic cover comprising a plurality of cover members telescopically assembled so as to be slidable to each other, wherein said dust intrusion preventing device according to claim 1 is provided at an end of at least one of adjacent cover members, said dust intrusion preventing device ejecting air or coolant toward an outer surface of the inner cover member of those to be able to be provided with said dust intrusion preventing device.

9. The telescopic cover according to claim 8, wherein one or more ejection orifices are formed on one of both of a surface of said sealing element opposite to the inner cover member of those to be able to be provided with the dust intrusion preventing device and a front surface of said sealing element positioned forward of the opposite surface.

10. A moving mechanism provided with said telescopic cover according to claim 8.

11. A moving mechanism comprising:
said telescopic cover provided with said dust intrusion preventing device according to claim 6; and
control means for controlling the supply of air or coolant, said control means controlling the supply of air or coolant, based on a presence or absence of a moving command for a moving axis of said moving mechanism or a moving direction of said moving command.
